# EUROPÄISCHE PATENTSCHRIFT

(11) **EP 2 310 723 B1**
(45) Veröffentlichungstag und Bekanntmachung des Hinweises auf die Patenterteilung: **11.07.2012**
(21) Anmeldenummer: 09777355.0
(22) Anmeldetag: 22.07.2009
(51) Int. Cl.: F16J 15/26, F01L 3/08

(54) **RINGDICHTUNG**
ANNULAR SEAL
JOINT ANNULAIRE

(30) Priorität: 14.08.2008 DE 102008037746
(43) Veröffentlichungstag der Anmeldung: 20.04.2011
(73) Patentinhaber: Märkisches Werk GmbH, 58553 Halver (DE)
(72) Erfinder: FELLMANN, Holger, 51429 Bergisch Gladbach (DE)
(74) Vertreter: Grättinger Möhring von Poschinger Patentanwälte Partnerschaft
(86) Internationale Anmeldenummer: PCT/EP2009/005308
(87) Internationale Veröffentlichungsnummer: WO 2010/017880

(56) Entgegenhaltungen:
- DE-A1- 4 220 689
- JP-A- 58 200 015
- US-A- 688 790
- US-A1- 2003 168 618

## Beschreibung

Die Erfindung betrifft eine Ringdichtung an einem Verbrennungsmotor zur Abdichtung des Ringspalts an einem Ventilschaft eines Ein- oder Auslassventils, wobei die Ringdichtung in einer umlaufenden demontierbaren Halterung aufgenommen ist.

Beispielsweise bei Schiffsmotoren besteht die Forderung, dass derartige Dichtungen eine besonders lange Standzeit bis zu ihrem Austausch besitzen. Ein frühzeitiger Dichtungswechsel bedeutet, dass die auf dem Ventilgehäuse aufsetzenden Bauteile komplett entfernt werden müssen, damit die Ringdichtung für die Führungsbuchse frei zugänglich ist und ausgetauscht werden kann.

Eine weitere Forderung an derartige Ringdichtungen besteht darin, dass deren Dichtungswirkung möglichst über die gesamte Lebensdauer unverändert aufrecht erhalten werden kann, denn ein Austausch der Ringdichtung soll sich wenigstens so lange erübrigen, bis der Motor wegen anderer Wartungsarbeiten, z.B. an den Auslassventilen ohnehin demontiert werden muss.

Bei bekannten hochbelastbaren Ringdichtungen, vorzugsweise aus Teflon, kann gelegentlich ein vorzeitiger Dichtungswechsel erforderlich sein, wenn Verbrennungsgase im Ringspalt der Führungsbuchse aufsteigen und die Ringdichtung überwinden mit der Folge, dass der Ölfilm zur Schmierung der Führungsbuchse unterbrochen wird.

Ein Austausch der Ringdichtung bedeutet in der Regel eine langwierige und damit kostspielige Unterbrechung der Motornutzung, denn der Dichtungsaustausch erfordert den Ausbau aller oberhalb der Führungsbuchse angeordneten Bauteile, in welchen der Ventilschaft aufgenommen ist. Bei Schiffsantrieben mit großen Zweitakt-Dieselmotoren bedeutet dies zumindest den Ausbau des Luftzylinders zum Schließen des Auslassventils, des Hydraulikzylinders zum Öffnen des Auslassventils und aller damit verbundener Aggregate; bei Viertaktmotoren bedeutet dies zumindest die Entfernung der Ventilfedern und die Demontage des Zylinderkopfdeckels, weil dort die Ringdichtung üblicherweise zwischen dem Flansch der Führungsbuchse und dem Zylinderkopfdeckel sitzt.

Häufig sind die auszutauschenden Ringdichtungen so weitgehend zerstört, dass zur Beseitigung aller Materialreste ein Ausbau des kompletten Auslassventils bzw. beim Viertaktmotor des kompletten Zylinderkopfs einschließlich der Anschlüsse für Hydraulik, Kühlwasser sowie der Abgasleitung unumgänglich sind.

Davon ausgehend ist bei einer bekannten Ringdichtung der eingangs genannten Art (GB 273590 A) eine Halterung vorgesehen, welche quer zur Schaftachse geteilt ist, damit sie demontiert werden kann. Jede Ringdichtung ist aus vier Segmenten zusammengesetzt, welche gegenseitig mit ihren Endbereichen ineinander greifen.

Außerdem ist eine Ringdichtung in einem gesonderten Gehäuse mit darin angeordneten Dichtungselementen aus Segmentbauteilen bekannt (US 688790 A), welche in drei Ringlagen angeordnet und elastisch zusammenspannbar sind.

DE 4220689 A1 offenbart eine gattugsgemäße Ringdichtungsanordung zur Abdichtung des Ringspalts an einem Ventilschaft eines Ein-oder Auslassventils eines Verbrennungsmotors.

Demgegenüber liegt der vorliegenden Erfindung die Aufgabe zugrunde, eine Ringdichtung zu schaffen, welche mit einer Führungsbuchse zusammenwirkt, einen einfachen Austausch ermöglicht und sich durch eine gleichbleibende Dichtungswirkung auszeichnet.

Diese Aufgabe wird erfindungsgemäß bei einer Ringdichtung der eingangs genannten Art gemäß dem Kennzeichen von Anspruch 1 gelöst.

Die erfindungsgemäße Halterung ist vorteilhaft als Ringelement mit winkelförmigem Querschnitt ausgebildet, dessen bis dicht an den Ventilschaft erstreckter Schenkel einen Flansch als Auflage für die Ringdichtung bildet und dessen von der Führungsbuchse axial abweisender Schenkel einen Flansch für die Schraubenbefestigung des Ringelements bildet. Dieser in axialer Richtung erstreckte Schenkel der Halterung ist in einer ersten Ausführungsform mit dem Flansch der Führungsbuchse verschraubt und in einer anderen Ausführungsform mit einem dem Flansch gegenüberliegenden Bauteil, also entweder bei einem Vierzylindermotor mit dem Zylinderkopfdeckel oder bei einem Zweizylindermotor mit der zugeordneten Stirnwand des Luftzylinders.

Durch die erfindungsgemäße Halterung wird erreicht, dass die Ringdichtung zwischen den in axialer Richtung beidseits angrenzenden Bauteilen sicher an ihrem Platz gehalten wird, während diese Bauteile für die Demontage der Ringdichtung voneinander entfernt werden. Für den Ausbau der Ringdichtung ist nach dem Entfernen der Bauteile lediglich die Halterung abzuschrauben, um den Zugang zur Ringdichtung zu gewährleisten.

Dadurch, dass die Ringdichtung in an sich bekannter Weise aus Segmentbauteilen zusammengesetzt ist, besteht die Möglichkeit ihres Ausbaus in radialer Richtung bezogen auf die Längsachse des Ventilschafts.

Eine bevorzugte Ausführungsform der Ringdichtung sieht vor, dass drei Segmentbauteile je Ringlage bei insgesamt drei Ringlagen vorgesehen sind, und dass die Segmentbauteile der mittleren Lage am Außenumfang beidseitig in axialer Richtung vorspringende Ränder aufweisen, innerhalb welchen die Segmentbauteile zweier äußerer Ringlagen gefasst sind. Auf diese Weise bleibt die relative Beweglichkeit der Segmentbauteile und damit ihre nicht nachlassende Dichtungswirkung gewährleistet.

Zweckmäßigerweise ist eine gewisse Begrenzung der Bewegung der Segmentbauteile von Vorteil; daher ist nach einer weiteren Ausgestaltung der Erfindung vorgesehen, dass jedes Segmentbauteil der mittleren Ringlage etwa in der Segmentmitte beidseits in axialer Richtung vorspringende Anschläge aufweist, welche ein Verdrehen im Sinne eines Wanderns der Segmentbauteile der äußeren Ringlagen in Umfangsrichtung begrenzen.

Der Zusammenhalt der Segmentbauteile wird nach der Montage der Ringdichtung dadurch gewährleistet, dass die Segmentbauteile den Ventilschaft umgeben und in axialer Richtung beidseits mit geringem Spiel innerhalb der Halterung aufgenommen und zwischen dieser und einem angrenzenden Bauteil axial abgestützt sind.

Durch den erfindungsgemäß vorgesehenen elastischen Spannring wird die Dichtungswirkung automatisch aufrecht erhalten, wobei ein Ölschmierfilm zwischen Dichtung und Ventilschaft eine lange Lebensdauer der Ringdichtung gewährleistet. Die Ölschmierung erfolgt von oben, durchquert die Dichtung und setzt sich dann fort im Ringspalt der Führungsbuchse. Bei Diesel-Zweitaktmotoren, bei denen gegenüber dem Flansch der Führungsbuchse der Luftzylinder angeordnet ist, fließt das im Luftzylinder angesammelte Öl über eine Spaltdichtung durch den Ringspalt des Zylinderbodens und gelangt von dort über die Ringdichtung zur Führungsbuchse.

Schließlich umfasst ein besonders vorteilhaftes erfindungsgemäßes Verfahren zur Demontage bzw. zum Austausch der in einer Halterung aufgenommenen Ringdichtung bei einem Auslassventil eines Zweitakt-Dieselmotors mit auf einem Ventilgehäuse sitzendem Druckluftzylinder die Verfahrensschritte
a) Lösen der Verbindung zwischen Druckluftzylinder und Ventilgehäuse;
b) Anheben des Druckluftzylinders auf dem Ventilschaft um eine Hublänge, welche maximal dem Ventilhub entspricht;
c) Freilegen der Ringdichtung durch Lösen und Abheben ihrer Halterung;
d) seitliches Ausbauen bzw. Einbauen der aus Segmentbauteilen zusammengesetzten Ringdichtung.

Es versteht sich von selbst, dass gerade in Anwendung der erfindungsgemäßen Ringdichtung an einem Zweitaktmotor der genannten Bauart besondere Vorteile erzielbar sind, nämlich insofern, als dort die über der Führungsbuchse vorgesehenen Bauteile lediglich gelöst und in axialer Richtung entlang dem Ventilschaft angehoben werden müssen, so dass sich deren vollständiger Ausbau erübrigt, wonach ein rasches seitliches Auswechseln der Ringdichtung ermöglicht wird.

Im folgenden wird die Erfindung anhand zweier Ausführungsbeispiele erläutert. Es zeigt
- Fig. 1: eine Ringdichtung, deren Halterung mit der Führungsbuchse verbunden ist, im Axialschnitt;
- Fig. 2: die Ringdichtung gemäß Fig. 1 mit voneinander abgehobenen Bauteilen;
- Fig. 3: eine Ringdichtung, deren Halterung mit dem Gehäuse des Luftzylinders verschraubt ist, im Axialschnitt;
- Fig. 4: die Ringdichtung gemäß Fig. 3 mit voneinander abgehobenen Bauteilen;
- Fig. 5: die Ringdichtung in der Draufsicht;
- Fig. 6: die Ringdichtung im Axialschnitt;
- Fig. 7: ein Segmentbauteil einer mittleren Ringlage der Ringdichtung und
- Fig. 8: ein Segmentbauteil einer äußeren Ringlage der Ringdichtung

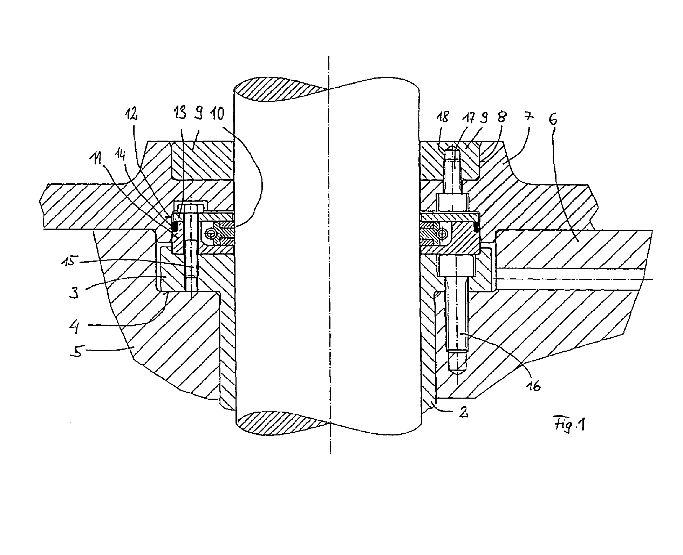

Fig. 1 zeigt einen Abschnitt eines Ventilschafts 1 eines Auslassventils bei einem Zweitakt-Dieselmotor für Schiffsantriebe. Der Ventilschaft 1 läuft in einer nach unten hin abgebrochen gezeichneten Führungsbuchse 2, welche an ihrem oberen Rand mit einem umlaufenden Flansch 3 endet. Der Flansch 3 der Führungsbuchse 2 sitzt auf einer Ausdrehung 4 eines Ventilgehäuses 5, auf dessen Oberseite 6 eine Stirnwand 7 eines darüber angeordneten Luftzylinders aufliegt. In ihrem Zentrum besitzt die Stirnwand 7 des Luftzylinders eine Eindrehung 8, in welcher ein metallischer Dichtungsring 9 aufgenommen ist. Dieser bildet mit dem Ventilschaft 1 eine definierte Spaltdichtung, die einen Ölfluss zur Erzeugung eines Ölfilms für die Schmierung der Führungsbuchse 2 und insbesondere einer darüber angeordneten Ringdichtung 10 ermöglicht. Die Ringdichtung 10 ist aufgenommen in einer umlaufenden, einen winkelförmigen Querschnitt aufweisenden Halterung 11. Diese ist gegenüber ihrer umfangsseitigen Sitzfläche 12 einerseits und gegenüber der Unterseite einer Deckplatte 13 andererseits mittels eines O-Rings 14 abgedichtet. Abdeckplatte 13, Halterung 11 und Flansch 3 der Führungsbuchse 2 sind über ihren Umfang durch mehrere Verbindungsschrauben 15 miteinander verbunden. Die Führungsbuchse 2 ist ebenfalls mittels mehrerer über den Umfang verteilter Befestigungsschrauben 16, die in ihrem Flansch 3 versenkt angeordnet sind, mit dem Ventilgehäuse 5 verschraubt. Auch der Dichtungsring 9 ist an mehreren Stellen über seinen Umfang mittels Verbindungsschrauben 17, welche in der Stirnwand 7 versenkt angeordnet sind, diese durchlaufen und in Gewindebohrungen 18 des Dichtungsrings 9 eingreifen, mit der Stirnwand 7 des Luftzylinders verschraubt.

Die insgesamt beschriebene Baueinheit ist mittels nicht gezeigter Spannschrauben, welche den Luftzylinder und den über diesen angeordneten Ölzylinder mit dem Ventilgehäuse 5 zusammenspannen, zu einer Baueinheit verbunden.

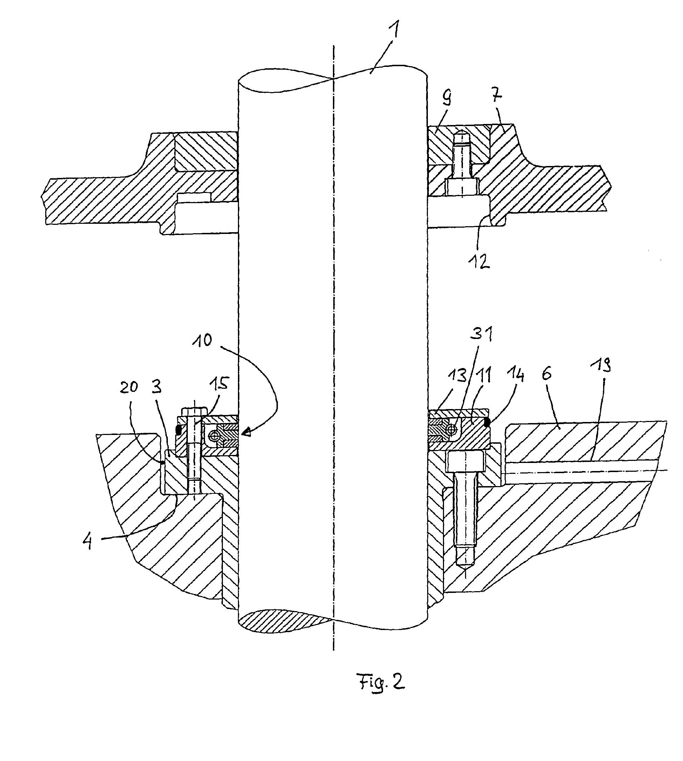

Fig. 2 zeigt die Baueinheit gemäß Fig. 1 mit abgehobener Stirnwand 7 des Luftzylinders, nach entsprechendem Lösen der Spannschrauben. In dieser abgehobenen Stellung des Luftzylinders ist die Halterung 11 und damit die Ringdichtung 10 für deren Demontage zugänglich. Der maximale Hub dieser Abhebung entspricht dabei dem maximalen Ventilhub des Auslassventils am Ventilschaft 1. Eine im Ventilgehäuse 6 querlaufende Bohrung 19 besorgt den Abtransport von ungenutztem Schmieröl, welches sich im Umfangsspalt 20 zwischen dem Flansch 3 der Führungsbuchse 2 und der Ausdrehung 4 des Ventilgehäuses 6 ansammelt.

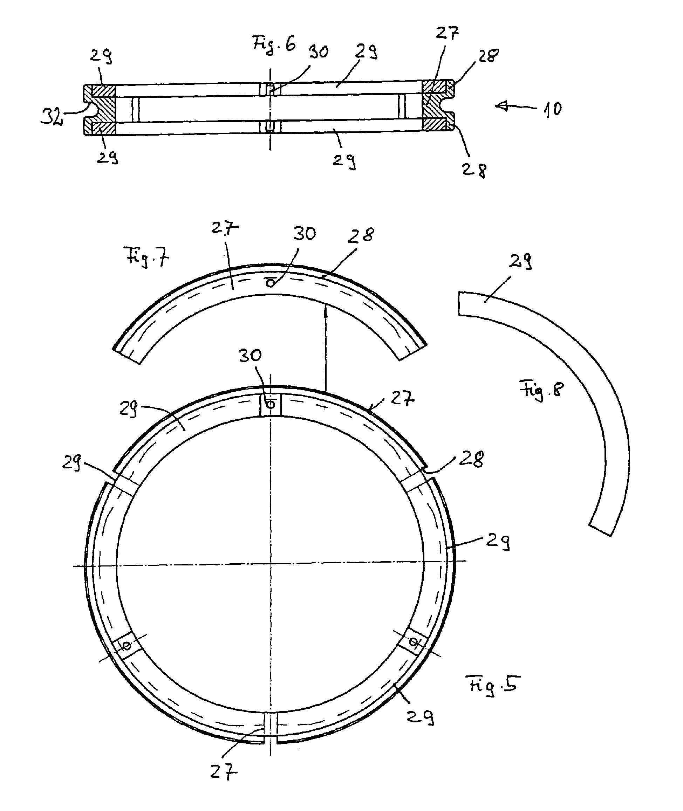

Zur Demontage der Ringdichtung 10 werden in der abgehobenen Stellung der Bauteile gemäß Fig. 2 die Verbindungsschrauben 15 gelöst, danach wird die Deckplatte 13 nach oben hin weggeschoben und die Ringdichtung 10 ist damit für den Dichtungsaustausch voll zugänglich. Dieser wird im einzelnen noch im Zusammenhang mit den Figuren 5-8 beschrieben.

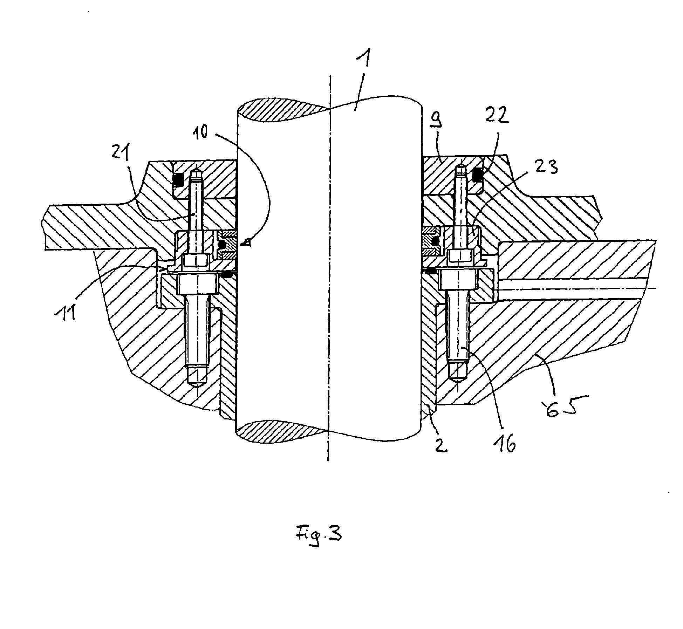

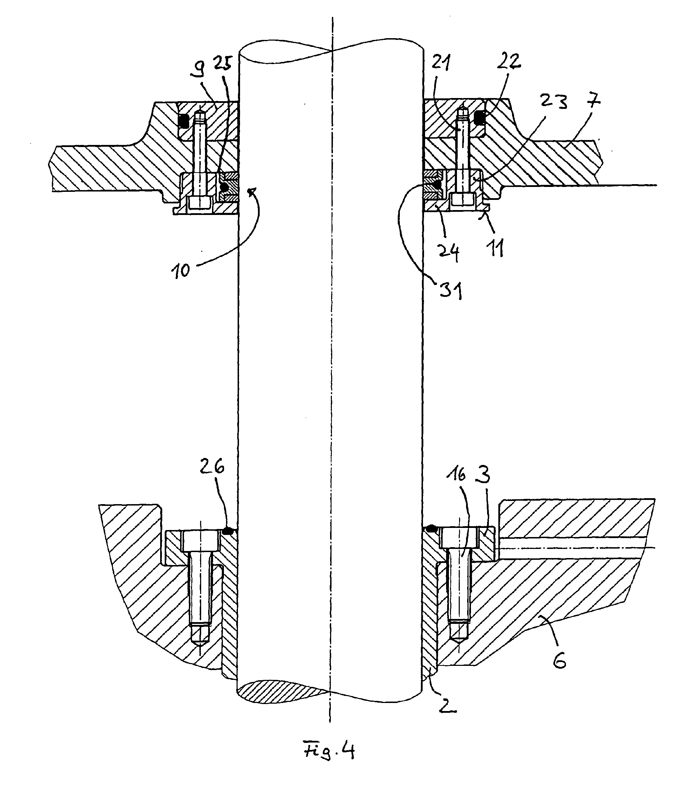

Die Figuren 3 und 4 zeigen eine geringfügig andere Anordnung der Ringdichtung 10, verglichen mit der Ausführungsform gemäß den Figuren 1 und 2. Bei der Ausführungsform nach den Figuren 3 und 4 ist, wie man der abgehobenen Stellung gemäß Fig. 4 entnehmen kann, die Halterung 11 und damit die Ringdichtung 10 mit der Unterseite der Stirnwand 7 des Luftzylinders verschraubt. Mit den hierfür vorgesehenen Verbindungsschrauben 21 wird noch der Dichtungsring 9 befestigt, dessen Außenumfang durch einen O-Ring 22 gegenüber der Eindrehung 8 in der Stirnwand 7 des Luftkolbens abgedichtet ist. Die Halterung 11 besitzt im Querschnitt gesehen einen Schenkel 24, der sich zum Ventilschaft hin erstreckt und einen dazu senkrecht verlaufenden Schenkel 23, in welchem die Verbindungsschrauben 21 versenkt aufgenommen sind. Auf dem Schenkel 24 liegt die Ringdichtung 10, wo sie in axialer Richtung definiert im Ringraum zwischen dem Schenkel 24 der Halterung 11 und dem Boden 25 einer Ausdrehung in der Unterseite der Stirnwand 7 des Luftzylinders aufgenommen ist.

Ein weiterer O-Ring 26 ist in einer entsprechenden Nut in der Oberseite des Flansches 3 der Führungsbuchse 2 vorgesehen. Die Führungsbuchse 2 ist im Bereich ihres Flansches 3 mittels mehrerer über den Umfang verteilter Verbindungsschrauben 16, ähnlich dem Ausführungsbeispiel gemäß der Figuren 1 und 2, mit dem Ventilgehäuse 6 verbunden.

Zum Ausbau bzw. Wechseln der Ringdichtung 10 wird in der Position gemäß Fig. 4 die Halterung 11 durch Lösen der Befestigungsschrauben 21 nach unten entfernt, so dass die Ringdichtung 10 ebenfalls frei zugänglich ist und für den Austausch nach unten geschoben werden kann.

In den Figuren 5-8 ist der Aufbau der Ringdichtung 10 im Detail dargestellt. Sie ist zusammengesetzt aus drei Ringlagen, nämlich einer mittleren Ringlage, deren Segmentbauteile 27 in axialer Richtung beidseits vorspringende Ränder 28 aufweisen, sowie zwei äußeren Ringlagen, welche jeweils aus drei einfachen Segmentbauteilen 29 bestehen. In gleicher Weise ist auch die mittlere Ringlage aus drei Segmentbauteilen 27 zusammengesetzt, welche jeweils in der Segmentmitte angeordnete Anschläge 30 besitzen, die beidseits in axialer Richtung vorspringen und auf diese Weise ein Verschieben der Segmentbauteile 29 der äußeren Ringlagen in Umfangsrichtung begrenzt.

Entsprechend der erläuterten Zusammensetzung der Ringsegmente aus einzelnen Segmentbauteilen 27, 29 besteht die Möglichkeit einer einfachen Zerlegung der Ringdichtung 20 und des seitlichen Ausbaus ihrer Segmentbauteile, sowie in gleicher Weise der Montage einer neuen Ringdichtung von der Seite her um den Umfang des Ventilschafts herum.

Eine wichtige Eigenschaft der Ringdichtung ist deren automatische Nachstellung in radialer Richtung, so dass sie stets mit leichtem Druck an der Außenseite des Ventilschafts 1 anliegt. Um diese radiale Nachstellung zu bewirken ist in den Figuren 1-4 jeweils ein elastischer Spannring 31 dargestellt, der durch seine Spannung die losen Segmentbauteile 27, 29 nach innen hin gegen den Umfang des Ventilschafts 1 zusammenspannt. Ein deratiger Spannring 31, z.B. in Form eines Elastomerrings oder einer Ringhülle, welche eine Schraubenfeder umfasst, ist in einer umlaufenden Nut 32 der Segmentbauteile 27 der mittleren Ringlage aufgenommen. Er sorgt dafür, dass sich die Ringdichtung automatisch gegen den Ventilschaft 1 nachstellt und damit die Aufrechterhaltung der vollen Dichtungswirkung über die gesamte Einsatzdauer der Ringdichtung 10 gewährleistet ist.

## Patentansprüche

1. Ringdichtungsanordnung zur Abdichtung des Ringspalts an einem Ventilschaft eines Ein- oder Auslassventils eines Verbrennungsmotors, umfassend zumindest eine Ringdichtung (10), eine Halterung (11), eine Führungsbuchse sowie ggf. ein dieser axial gegenüberliegendes Bauteil, wobei die Ringdichtung (10) in einer umlaufenden demontierbaren Halterung (11) aufgenommen ist,
**dadurch gekennzeichnet,**
**dass** die Halterung (11) mit der Führungsbuchse (2) des Ventilschafts (1) oder dem dieser axial gegenüberliegenden Bauteil fest verschraubt ist, dass die Halterung (11) als Ringelement mit winkelförmigem Querschnitt ausgebildet ist, dessen bis dicht an den Ventilschaft (1) erstreckter Schenkel (24) einen Flansch als Auflage für die Ringdichtung (10) bildet und dessen von der Führungsbuchse (2) axial abweisender Schenkel (23) einen Flansch für die Schraubenbefestigung des Ringelements bildet, und
**dass** die Ringdichtung (10) aus Segmentbauteilen (27; 29) zerlegbar zusammengesetzt ist, die in Umfangsrichtung sich überlappend und in Axialrichtung wenigstens in zwei Ringlagen angeordnet und gegen den Ventilschaft (1) automatisch nachstellbar zusammengespannt sind.

2. Ringdichtung nach Anspruch 1,
**dadurch gekennzeichnet,**
**dass** drei Segmentbauteile (27; 29) je Ringlage bei insgesamt drei Ringlagen vorgesehen sind und dass die Segmentbauteile (27) der mittleren Ringlage am Außenumfang beidseitig in axialer Richtung vorspringende Ränder (28) aufweisen, innerhalb welchen die Segmentbauteile (29) zweier äußerer Ringlagen gefasst sind.

3. Ringdichtung nach Anspruch 2,
**dadurch gekennzeichnet,**
**dass** jedes Segmentbauteil (27) der mittleren Ringlage etwa in der Segmentmitte beidseits in axialer Richtung vorspringende Anschläge (30) aufweist, welche ein Verdrehen der Segmentbauteile (29) der äußeren Ringlagen in Umfangsrichtung begrenzen.

4. Verfahren zur Demontage bzw. zum Austausch einer in
einer Halterung aufgenommenen Ringdichtung (10) in einer Ringdichtungsanordnung nach den Ansprüchen 1 bis 3 bei einem Auslassventil eines Zweitaktdieselmotors mit auf einem Ventilgehäuse (5) sitzendem Druckluftzylinder (7), mit den Schritten
a) Lösen der Verbindung zwischen Druckluftzylinder (7) und Ventilgehäuse (5);
b) Anheben des Druckluftzylinders (7) entlang dem Ventilschaft (1) um eine Hublänge, welche maximal dem Ventilhub entspricht;
c) Freilegen der Ringdichtung (10) durch Lösen und Abheben ihrer Halterung (11)
d) seitliches Ausbauen bzw. Einbauen der aus Segmentbauteilen (27; 29) zusammengesetzten Ringdichtung (10).

## Claims

1. An annular seal arrangement for sealing the annular gap on a valve shaft of an inlet valve or outlet valve of an internal combustion engine, comprising at least one annular seal (10), a mount (11), a guide bush as well as, if necessary, a component that is axially opposite said guide bush, wherein the annular seal (10) is accommodated in a circumferential demountable mount (11),
**characterised in that**
the mount (11) is firmly screwed to the guide bush (2) of the valve shaft (1) or to the component that is axially opposite said guide bush (2); **in that** the mount (11) is designed as an annular element with an angular cross section whose limb (24) that extents right to the valve shaft (1) forms a flange as a support for the annular seal (10), and whose limb (23) that axially points away from the guide bush (2) forms a flange for the screw fastening arrangement of the annular element; and **in that** the annular seal (10) comprises segment components (27; 29) that can be disassembled, which in circumferential direction overlap and in axial direction are arranged in at least two annular layers and are clamped together so as to be automatically readjustable towards the valve shaft (1).

2. The annular seal according to claim 1,
**characterised in that**
three segment components (27; 29) for each annular layer with a total of three annular layers are provided and **in that** the segment components (27) of the middle annular layer at the outer circumference comprise rims (28) that on both sides project in axial direction, within which rims (28) the segment components (29) of two outer annular layers are gripped.

3. The annular seal according to claim 2,
**characterised in that**
each segment component (27) of the middle annular layer comprises limit stops (30), arranged approximately in the segment middle, that project on both sides in axial direction, which limit stops (30) delimit rotation of the segment components (29) of the outer annular layers in circumferential direction.

4. A method for dismantling or exchanging an annular seal (10) in an annular seal arrangement according to claims 1 to 3, which seal (10) is accommodated in a mount in an outlet valve of a two-stroke diesel engine with a compressed-air cylinder (7) seated on a valve housing (5), comprising the steps of:
a) undoing the connection between the compressed-air cylinder (7) and the valve housing (5);
b) lifting the compressed-air cylinder (7) along the valve shaft (1) by a stroke length that at most corresponds to the valve lift;
c) exposing the annular seal (10) by undoing and lifting its mount (11);
d) laterally deinstalling or installing the annular seal (10) comprising segment components (27; 29).

## Revendications

1. Agencement de joint annulaire pour l'étanchéité de la fente annulaire sur une tige de soupape d'une soupape d'entrée ou de sortie d'un moteur à combustion, comprenant au moins un joint annulaire (10), un support (11), une douille de guidage et éventuellement un composant opposé axialement à cette douille, le joint annulaire (10) étant réceptionné dans un support (11) périphérique et démontable,
**caractérisé en ce que**
le support (11) est vissé fixement avec la douille de guidage (2) de la tige de soupape (1) ou le composant opposé axialement à cette douille,
**en ce que** le support (11) est conçu comme élément annulaire avec section en forme d'angle, dont la branche (24) étendue jusqu'à proximité de la tige de soupape (1) forme une bride comme support pour le joint annulaire (10) et dont la branche (23) déviant axialement de la douille de guidage (2) forme une bride pour la fixation à vis de l'élément annulaire,
et
**en ce que** le joint annulaire (10) est assemblé à partir de composants segmentés (27 ; 29) de façon démontable, lesquels sont disposés en se chevauchant dans le sens périphérique et au moins dans deux positions de bague dans le sens axial et sont tendus ensemble automatiquement de façon ajustable contre la tige de soupape (1).

2. Joint annulaire selon la revendication 1,
**caractérisé en ce que**
trois composants segmentés (27 ; 29) sont prévus par position de bague pour au total trois positions de bague et **en ce que** les composants segmentés (27) de la position de bague centrale présentent des bords (28) débordant sur le pourtour extérieur des deux côtés dans le sens axial, bords à l'intérieur desquels les composants segmentés (29) de deux positions de bague extérieures sont saisis.

3. Joint annulaire selon la revendication 2,
**caractérisé en ce que**
chaque composant segmenté (27) de la position de bague centrale présente à peu près au centre du segment des butées (30) dépassant des deux côtés dans le sens axial, lesquelles butées délimitent une rotation des composants segmentés (29) des positions de bague extérieures dans le sens périphérique.

4. Procédé pour le démontage et pour le remplacement d'un joint annulaire (10) réceptionné dans un support dans un agencement de joint annulaire selon les revendications 1 à 3 pour une soupape de sortie d'un moteur diesel deux temps comprenant un vérin à air comprimé (7) monté sur un boîtier de soupape (5), présentant les étapes suivantes
a) détachement de la liaison entre le vérin à air comprimé (7) et le boîtier de soupape (5) ;
b) soulèvement du vérin à air comprimé (7) le long de la tige de soupape (1) d'une longueur de course qui correspond au maximum à la course de soupape ;
c) mise à nu du joint annulaire (10) par détachement et soulèvement de son support (11)
d) démontage ou montage latéral du joint annulaire (10) constitué de composants segmentés (27 ; 29).
